Europäisches Patentamt

European Patent Office

Office européen des brevets

(19)

(11) Veröffentlichungsnummer : **0 158 024**
**B1**

(12)

# EUROPÄISCHE PATENTSCHRIFT

(45) Veröffentlichungstag der Patentschrift :
15.04.87

(21) Anmeldenummer : 85101224.5

(22) Anmeldetag : 06.02.85

(51) Int. Cl.⁴ : **F 16 C 33/10, F 16 D 65/22**

(54) Lagerbuchse.

(30) Priorität : 02.03.84 DE 3407678

(43) Veröffentlichungstag der Anmeldung :
16.10.85 Patentblatt 85/42

(45) Bekanntmachung des Hinweises auf die Patenterteilung : 15.04.87 Patentblatt 87/16

(84) Benannte Vertragsstaaten :
DE FR GB IT

(56) Entgegenhaltungen :
DE-A-    871 565
DE-B- 1 208 569
DE-B- 1 210 341
DE-C-    832 968
FR-A-    519 962
FR-A-    626 819
FR-A- 1 310 614
FR-A- 1 528 252
GB-A- 2 023 239
US-A- 2 625 448
US-A- 2 892 662

(73) Patentinhaber : Bergische Achsenfabrik Fr. Kotz &
Söhne
Am Ohlerhammer
D-5276 Wiehl 1 (DE)

(72) Erfinder : Steiner, Helmut
Freiherr-vom-Stein-Strasse 1
D-5276 Wiehl (DE)
Erfinder : Ebbinghaus, Wilfried
Perkerstrasse 42
D-5276 Wiehl (DE)
Erfinder : Paech, Hartmut
Stettiner Strasse 1
D-5220 Waldbröl (DE)

(74) Vertreter : Patentanwälte Dipl.-Ing. Alex Stenger
Dipl.-Ing. Wolfram Watzke Dipl.-Ing. Heinz J. Ring
Kaiser-Friedrich-Ring 70
D-4000 Düsseldorf 11 (DE)

EP 0 158 024 B1

## Beschreibung

Gegenstand der Erfindung ist eine Lagerbuchse für ein Gleitlager einer Bremswelle einer Trommelbremse mit einer an einem Ende der Buchse auf ihrer Außenseite umlaufenden, ringförmigen Fettkammer für den Fetteintritt, von dieser in axialer Richtung abzweigenden Verteilungskanälen, die in jeweils einer sich radial durch die Buchse erstreckenden Bohrung münden, und auf der Innenseite der Buchse angeordneten, in entgegengesetzter axialer Richtung verlaufenden Schmierkanälen.

Bei einer bekannten, für den gleichen Anwendungsfall offenkundig vorbenutzten Lagerbuchse sind die von der Fettkammer ausgehenden Verteilungskanäle unmittelbar über Bohrungen mit den auf der Innenseite in entgegengesetzter Richtung verlaufenden Schmierkanälen verbunden, die am Ende der Lagerbuchse münden und daher freie Austritte haben. Bei dieser bekannten Lagerbuchse ist die Fettverteilung und im Zusammenhang damit die Ausbildung des Schmierfilmes mangelhaft. Dies kommt in erster Linie daher, weil die Schmierkanäle frei austreten und infolgedessen beim Füllen des miteinander kommunizierenden Systems der Verteilungs- und Schmierkanäle ein Fettstau nicht erzeugt werden kann. Außerdem haben die bekannten Lagerbuchsen den Nachteil, daß bedingt durch ihren Einsatz in Trommelbremsen von Straßenfahrzeugen Feuchtigkeit, insbesondere Salzsprühnebel von außen eintreten und die Korrosion begünstigen können.

Davon ausgehend liegt der Erfindung die Aufgabe zugrunde, eine einfach konstruierte Lagerbuchse zu schaffen, die eine bessere Fettverteilung bewirkt und die Ausbildung eines geschlossenen Schmierfilmes ermöglicht, der gegen das Eintreten von Feuchtigkeit abgedichtet ist.

Zur technischen Lösung dieser Aufgabe wird folgende Merkmalskombination vorgeschlagen :

a) alle Bohrungen sind auf der Innenseite der Buchse durch einen umlaufenden ersten Ringkanal miteinander verbunden ;

b) die inneren Schmierkanäle sind — in Umfangsrichtung betrachtet — zwischen den Verteilungskanälen liegend und parallel zu diesen verlaufend zwischen den Bohrungen an den ersten Ringkanal angeschlossen ;

c) die Schmierkanäle münden in einem umlaufenden zweiten Ringkanal und

d) an den zweiten Ringkanal ist wenigstens ein Fettaustrittskanal angeschlossen.

Eine nach dieser technischen Lehre ausgebildete Lagerbuchse hat den Vorteil einer erheblich besseren Fettverteilung und ermöglicht schon bei der ersten Fettfüllung die Ausbildung eines geschlossenen Schmierfilmes, weil das Fett in dem kommunizierenden System über den ersten inneren Ringkanal besser auf die Schmierkanäle verteilt wird und sich beim Abfluß über den zweiten Ringkanal ein Rückstau bildet, der das Fett in die zwischen den Schmierkanälen liegenden Flächen zwingt. Der Rückstau entsteht bei der Fettfüllung dadurch, daß der Querschnitt des bzw. der Fettaustrittskanäle erheblich geringer als der Querschnitt der Verteilungs- bzw. Schmierkanäle ist.

Ein weiterer Vorteil der vorgeschlagenen Konstruktion besteht darin, daß die beiden den Enden der Lagerbuchse auf der Innenseite benachbarten Ringkanäle nach dem Einbringen der Fettfüllung die Wirkung von Ringdichtungen haben, welche das Eintreten von Feuchtigkeit in den Bereich des Schmierfilmes behindern.

Bei einer praktischen Ausführungsform sind die Verteilungskanäle und die Schmierkanäle zweckmäßig unter einem spitzen Winkel von vorzugsweise 17° zur axialen Richtung verlaufend angeordnet, um ihre Gesamtlänge und damit die mit Fett benetzte Oberfläche der Bremswelle zu vergrößern. Der Abstand der Schmierkanäle wird zweckmäßig so gewählt, daß er etwa dem Hub der Bremswelle entspricht, so daß ständig ein geschlossener Schmierfilm aufrechterhalten wird.

Weitere Einzelheiten und Vorteile des Gegenstandes der Erfindung ergeben sich aus der nachfolgenden Beschreibung der zugehörigen Zeichnungen, in denen eine bevorzugte Ausführungsform einer erfindungsgemäß ausgebildeten Lagerbuchse in Ansichten, Schnitten und Abwicklungen dargestellt worden ist. In den Zeichnungen zeigen :

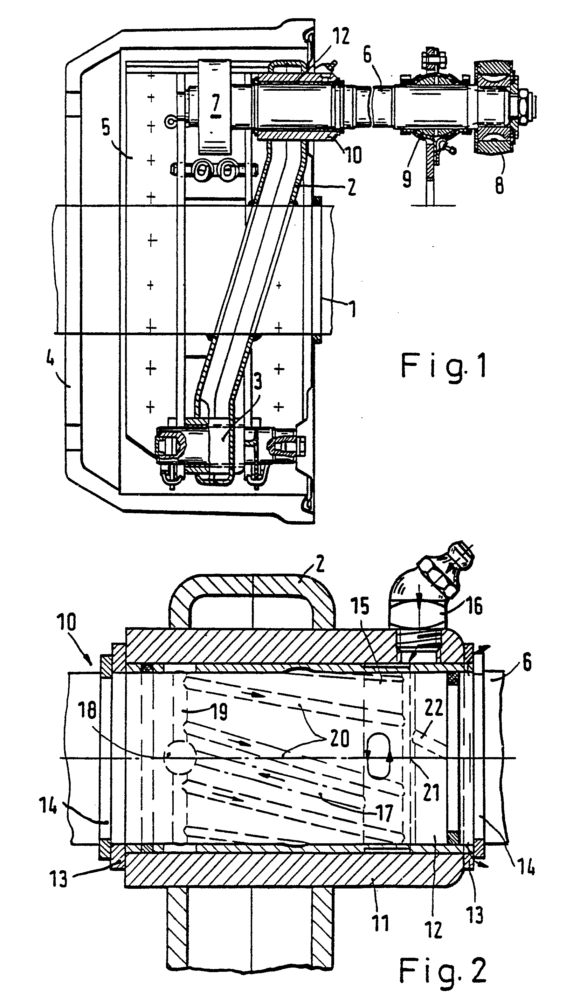

Figur 1 eine Trommelbremse mit einem in einer Bremsbrücke angeordneten Gleitlager für die Bremswelle im Längsschnitt ;

Figur 2 einen vergrößerten Ausschnitt des in der Fig. 1 dargestellten Gleitlagers zur Veranschaulichung der Lage einer Lagerbuchse ;

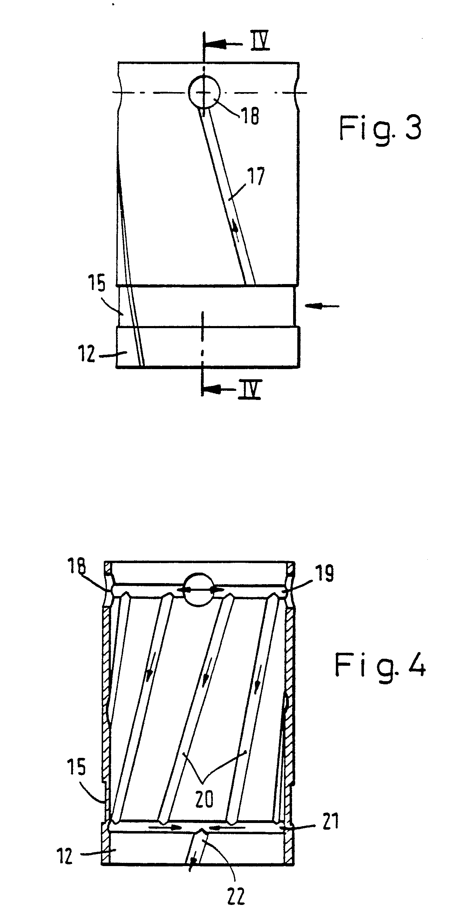

Figur 3 eine Lagerbuchse in Ansicht von außen ;

Figur 4 dieselbe Lagerbuchse entlang der Linie IV-IV in Fig. 3 geschnitten in Ansicht ;

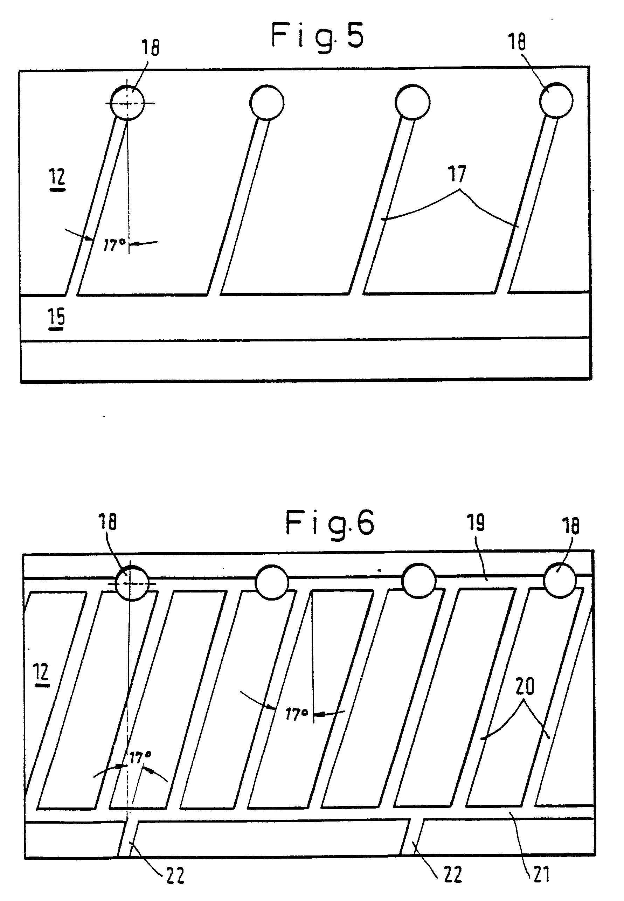

Figur 5 eine Abwicklung derselben Lagerbuchse in Ansicht von außen ;

Figur 6 eine Abwicklung derselben Lagerbuchse in Ansicht von innen.

Auf einem mit strichpunktierten Linien angedeuteten Achskörper 1 ist eine Bremsbrücke 2 befestigt. In der Bremsbrücke 2 ist am unteren Ende ein Stützlager 3 für mit einer Bremstrommel 4 zusammenwirkende Bremsbacken 5 angeordnet, die über eine Bremswelle 6 mit einem Bremsnocken 7 gespreizt werden können. Die Bremswelle 6 wird mit einem Bremshebel 8 betätigt und ist in einem mit dem Achskörper 1 verbundenen Stützlager 9 und in einem in der Bremsbrücke 2 befestigten Gleitlager 10 gelagert.

Das Gleitlager 10 besteht aus einer in der Bremsbrücke 2 befestigten äußeren Lagerschale 11 und einer in diese eingepreßten Lagerbuchse 12 aus Messing, Bronze oder einem als Lagerwerkstoff geeigneten Sintermetall. Die Lagerbuchse 12 wird mit Distanzringen 13 und Sprengringen 14 in ihrer Position fixiert.

Die Lagerbuchse 12 besitzt auf ihrer Außenseite an einem Ende eine umlaufende, ringförmige Fettkammer 15, die teilweise unter einem in der Lagerschale 11 vorgesehenen Schmiernippel 16 liegt. Von der Fettkammer 15 gehen mehrere, im dargestellten Ausführungsbeispiel vier Verteilungskanäle 17 aus, die am anderen Ende der Lagerbuchse 12 in Bohrungen 18 münden. Auf der Innenseite sind alle Bohrungen 18 durch einen umlaufenden, ersten Ringkanal 19 miteinander verbunden. Von dem ersten Ringkanal 19 gehen mehrere, im dargestellten Ausführungsbeispiel acht Schmierkanäle 20 aus, die am anderen Ende der Lagerbuchse 12 an einen umlaufenden, zweiten Ringkanal 21 angeschlossen sind. An den zweiten Ringkanal 21 sind mehrere, im dargestellten Ausführungsbeispiel zwei Fettaustrittskanäle 22 angeschlossen.

Die Verteilungskanäle 17 und Schmierkanäle 20 verlaufen parallel zueinander und sind unter einem Winkel von ca. 17° zur axialen Richtung geneigt. Zwischen zwei Verteilungskanälen 17 sind jeweils zwei Schmierkanäle 20 angeordnet, so daß die Anzahl der Schmierkanäle 20 doppelt so groß ist wie die Anzahl der Verteilungskanäle 17.

Das Fett wird durch den Schmiernippel 16 eingepresst und verteilt sich sodann über die Fettkammer 15, die Verteilungskanäle 17, die Bohrungen 18 und den ersten Ringkanal 19 in die Schmierkanäle 20. Der Fettüberschuß kann durch den zweiten Ringkanal 21 und die beiden Fettaustrittskanäle 22 ins Freie austreten. Mit dem austretenden Fett wird angezeigt, daß die Schmierkanäle 20 gefüllt sind.

## Patentansprüche

1. Lagerbuchse für ein Gleitlager (10) einer Bremswelle (6) einer Trommelbremse mit einer an einem Ende der Buchse auf ihrer Außenseite umlaufenden, ringförmigen Fettkammer (15) für den Fetteintritt, von dieser in axialer Richtung abzweigenden Verteilungskanälen (17), die in jeweils einer sich radial durch die Buchse erstreckenden Bohrung (18) münden, und auf der Innenseite der Buchse angeordneten, in entgegengesetzter axialer Richtung verlaufenden Schmierkanälen (20), dadurch gekennzeichnet,
a) daß die Bohrungen (18) auf der Innenseite der Buchse durch einen umlaufenden ersten Ringkanal (19) miteinander verbunden sind,
b) daß die inneren Schmierkanäle (20) — in Umfangsrichtung betrachtet — zwischen den Verteilungskanälen (17) liegend und parallel zu diesen verlaufend zwischen den Bohrungen (18) an den ersten Ringkanal (19) angeschlossen sind,
c) daß die Schmierkanäle (20) in einem umlaufenden zweiten Ringkanal (21) münden und
d) daß an dem zweiten Ringkanal (21) wenigstens ein Fettaustrittskanal (22) angeschlossen ist.

2. Lagerbuchse nach Anspruch 1, dadurch gekennzeichnet, daß die Verteilungskanäle (17) und die Schmierkanäle (20) unter einem spitzen Winkel von vorzugsweise 17° zur axialen Richtung verlaufend angeordnet sind.

3. Lagerbuchse nach den Ansprüchen 1 und 2, dadurch gekennzeichnet, daß der Abstand der Schmierkanäle (20) etwa dem Hub der Bremswelle (6) entspricht.

4. Lagerbuchse nach den Ansprüche 1 bis 3, dadurch gekennzeichnet, daß die Anzahl der Schmierkanäle (20) größer, vorzugsweise doppelt so groß wie die Anzahl der Verteilungskanäle (17) ist.

5. Lagerbuchse nach den Ansprüchen 1 bis 3, dadurch gekennzeichnet, daß die Anzahl der Fettaustrittskanäle (22) kleiner als die Anzahl der Schmierkanäle (20) ist.

## Claims

1. Bearing bush for a slide bearing (10) of a brake axle (6) of a drum brake with an annular grease chamber (15) for the input of grease, the chamber surrounding one end of the bush on its outer side, distribution channels (17) branching off from this chamber in the axial direction, which channels each join a respective bore (18) extending radially through the bush, and lubricating channels (20) disposed on the inner side of the bush and running in the opposite axial direction, characterised in that
a) the bores (18) are connected together on the inner side of the bush *via* a surrounding first annular channel (19),
b) the inner lubricating channels (20) — seen in circumferential direction — lying between the distribution channels (17) and running parallel with them between the bores (18) are connected to the first annular channel (19),
c) the lubricating channels (20) join a surrounding second annular channel (21), and
d) at least one grease outlet channel (22) is connected to the second annular channel (21).

2. Bearing bush according to claim 1, characterised in that the distribution channels (17) and the lubricating channels (2) are disposed running at an acute angle of preferably 17° to the axial direction.

3. Bearing bush according to claim 1 and 2, characterised in that the spacing of the lubricating channels (20) approximately corresponds to the stroke of the brake axle (6).

4. Bearing bush according to claims 1 to 3, characterised in that the number of the lubricating channels (2) is greater than, preferably twice as great as the number of distribution channels (17).

5. Bearing bush according to claims 1 to 3, characterised in that the number of the grease outlet channels (22) is smaller than the number of lubricating channels (20).

## Revendications

1. Coussinet de palier pour un palier lisse (10) d'un arbre de frein (6) d'un frein à tambour, avec une chambre de graissage (15) de forme annulaire, pour une entrée de graissage, pratiquée à une extrémité sur le côté extérieur du coussinet, avec des canaux de répartition (17) s'étendant en direction axiale à partir de la chambre, chacun d'eux débouchant dans un perçage (18) s'étendant radialement à travers le coussinet, et des canaux de graissage (20) disposés sur le côté intérieur du coussinet s'étendant en direction axiale en sens inverse,
caractérisé en ce que

a) les perçages (18) sont reliés entre eux sur le côté intérieur du coussinet par un premier canal annulaire circonférentiel (19),

b) les canaux de graissage intérieurs (20) sont, en considérant la direction périphérique, raccordés au premier canal annulaire (19) entre les perçages (18), en s'étendant entre les canaux de répartition (17) et parallèlement à ceux-ci,

c) les canaux de graissage (20) débouchent dans un deuxième canal annulaire circonférentiel (21) et

d) au moins un canal de sortie de graisse (22) est raccordé au deuxième canal annulaire (21).

2. Coussinet de palier selon la revendication 1, caractérisé en ce que les canaux de répartition (17) et les canaux de graissage (20) sont disposés en s'étendant suivant un angle aigu, de préférence égal à 17°, par rapport à la direction axiale.

3. Coussinet de palier selon les revendications 1 et 2, caractérisé en ce que la distance des canaux de graissage (20) correspond sensiblement à la course de l'arbre de frein (6).

4. Coussinet de palier selon les revendications 1 à 3, caractérisé en ce que le nombre des canaux de graissage (20) est plus grand, de préférence deux fois plus grand, que le nombre des canaux de répartition (17).

5. Coussinet de palier selon les revendications 1 à 3, caractérisé en ce que le nombre des canaux de sortie de graisse (22) est inférieur au nombre des canaux de graissage (20).

Fig.1

Fig.2

Fig. 3

Fig. 4

# Fig. 5

# Fig. 6